(19) Europäisches Patentamt
European Patent Office
Office européen des brevets

(11) EP 0 857 976 B1

(12) # EUROPÄISCHE PATENTSCHRIFT

(45) Veröffentlichungstag und Bekanntmachung des Hinweises auf die Patenterteilung:
**22.01.2003 Patentblatt 2003/04**

(51) Int Cl.$^7$: **G01P 3/56**, F16H 61/04

(21) Anmeldenummer: **97120334.4**

(22) Anmeldetag: **20.11.1997**

(54) **Verfahren zur Messung der Relativbewegung von zumindest zwei Bauteilen**

Method for measuring the relative movement of at least two moving parts

Procédé de mesure du mouvement relatif d'au moins deux pièces mobiles

(84) Benannte Vertragsstaaten:
**AT DE FR GB SE**

(30) Priorität: **31.01.1997 DE 19703488**

(43) Veröffentlichungstag der Anmeldung:
**12.08.1998 Patentblatt 1998/33**

(73) Patentinhaber: **Dr.Ing.h.c. F. Porsche Aktiengesellschaft**
**70435 Stuttgart (DE)**

(72) Erfinder: **Baur, Peter**
**71297 Mönsheim (DE)**

(56) Entgegenhaltungen:
**US-A- 3 816 712**
**US-A- 4 817 470**
**US-A- 4 897 635**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 857 976 B1

Printed by Jouve, 75001 PARIS (FR)

## Beschreibung

Die Erfindung betrifft ein Verfahren zur Messung der Relativbewegung von zumindest zwei Bauteilen.

Die Messung der Relativbewegung von Bauteilen zueinander ist überall dort von Bedeutung, wo diese Bauteile in Wechselwirkung miteinander treten. Vorgänge, bei denen derartige Wechselwirkungen auftreten, können beispielsweise Einrückvorgänge bei Kupplungen, das Einlaufen eines Zahnes eines Zahnrades in die Zahnlücke eines zweiten Zahnrades, Verschiebungen von kämmenden Zahnrädern unter Last, Verbiegung von Wellen und Körper und vieles anderes mehr sein. Derartige Messungen werden durchgeführt, um den Verlauf des beobachteten Vorganges näher untersuchen zu können.

In diesem Zusammenhang stellt sich das Problem, daß sehr hohe Anforderungen an die Meßgenauigkeit gestellt werden. Außerdem wird die Auswertung der Meßwerte insbesondere dann erschwert, wenn die beobachteten Bauteile nicht allein zueinander, sondern zusätzlich jedes Bauteil für sich selbst bewegt ist und andere Bauteile, die nicht meßtechnisch erfaßt werden können, den Bewegungsablauf zusätzlich beeinflussen. Kurz gesagt wird die Auswertung der Meßwerte dadurch erschwert, daß mehrere den Bewegungsablauf beeinflussende Parameter gleichzeitig ausgewertet werden müssen.

Zur Verdeutlichung dieses Problemes kann die Messung des Synchronisiervorganges beim Einrücken eines Ganges in einem synchronisierten Fahrzeuggetriebe herangezogen werden, die bisher mit Schwierigkeiten verbunden war:

- Eine bekannte Beobachtung des Vorganges durch optische Methoden ist problematisch, da sich die entsprechenden Bauteile rasch bewegen und die Sicht durch abgeschleudertes Öl erschwert wird.
- Bei einer bekannten Erfassung der Drehbewegungen durch entsprechende Drehimpulsgeber besteht das Problem, daß durch das Drehzahlniveau wie auch durch die Meßungenauigkeiten der Drehzahlgeber der eigentliche Vorgang der Synchronisierung, der sich in einen Bereich kleiner Änderungen der erfaßten Signale abspielt, nur schwer zu identifizieren und auszuwerten ist.
- Die Bewegungsrichtung einzelner Bauteile kann sich während des Berührungskontaktes kurzzeitig ändern und die Richtungsänderung ist durch herkömmliche Darstellungsmethoden, z.B. Linienschriebe der Drehzahlen, schwer nachvollziehbar.
- Die Berührung von Bauteilen verursacht in der Regel eine Änderung der Bewegungsrichtung oder eine Veränderung ihrer Geschwindigkeit. Diese Impulsänderung wird bei rotierenden Bauteilen normalerweise als Änderung der Drehgeschwindigkeit meßtechnisch erfaßt. Diese oftmals kurzzeitige Drehzahländerung gibt ohne weitergehende Auswertung nur wenig Auskunft über die verursachende Kraftrichtung, Winkeländerung oder Berührungspunkte.

Erfindungsgemäß wird dieses Problem mit den Merkmalen des Patentanspruches 1 gelöst. Es wird daher ein Verfahren zur Messung von Relativbewegungen vorgeschlagen, bei dem nach einem Erfassen der Reihen von Meßwerten zunächst unter Berücksichtigung bekannter Randbedingungen zumindest ein Teil der Reihen von Meßwerten durch Verknüpfung miteinander abgeglichen wird. Durch die Verwendung bekannter Randbedingungen bei dem Abgleich der Reihen von Meßwerten wird mit einfachen Mitteln und ohne zusätzlichen Aufwand hinsichtlich der Sensorbestükkung oder des Meßverfahrens die Genauigkeit der Messung deutlich verbessert, da durch die Randbedingungen das Verhältnis der Meßwerte im Bereich der Randbedingungen exakt oder annähernd exakt bekannt ist. Durch eine anschließend vorgenommene Normierung der Reihen von Meßwerten kann darüber hinaus bei Bedarf das Bezugssystem, d.h. der Standpunkt des Beobachters der Messung, frei gewählt werden, so daß die Möglichkeit besteht, das zu beobachtende Ereignis aus einem besonders geeigneten Bezugssystem heraus zu betrachten. Die gemeinsame Darstellung der Reihen von Meßwerten schließlich bildet die Relativbewegung der beobachteten Bauteile besonders genau ab, so daß insgesamt eine hinsichtlich der Genauigkeit und Auswertbarkeit verbesserte Auswertung der Messung möglich ist.

Ein Beispiel zum Abgleichen unter Berücksichtigung geeigneter Randbedingungen: bewegen sich zwei Bauteile, hier zwei Zahnräder, während einer Messung mit genau gleicher Geschwindigkeit, weil sie ohne Schlupf ineinander kämmen, so wird in der Regel dennoch eine unterschiedliche Drehgeschwindigkeit von wenigen Umdrehungen pro Minute als gemessene Größe erfaßt. Diese von der Realität abweichende Drehzahldifferenz hat ihre Ursachen in der Meßgenauigkeit der Meßketten beider Bauteile, die endlich begrenzt ist und innerhalb einer zulässigen Toleranz liegt (siehe auch Fig. 3). Die aus Gründen der Meßungenauigkeit ermittelte Geschwindigkeitsdifferenz wird als "Offset" aus der mathematischen Differenz beider Signale berechnet und auf die Zahlenwerte der gemessenen Geschwindigkeit zumindest eines der beiden Bauteile aufaddiert. Für den Geschwindigkeitsabgleich darf nur ein Zeitbereich auswertet werden, in dem die obengenannten Randbedingungen (Geschwindigkeitsgleichheit) gültig sind. Damit wird sichergestellt, daß die Zahlenwerte beider Geschwindigkeiten im Mittel keine relative Abweichungen zeigen. Der Geschwindigkeitsoffset läßt sich sehr genau ermitteln, wenn man jeweils eine Kopie der Meßreihen mit einem digitalen (z.B. Butterworth-) Tiefpaßfilter mit einer Durchlaßfrequenz von ca. 5% der verwendeten Abtastfrequenz glättet und die Differenz aus den geglätteten Signalen bildet. Der Geschwindigkeitsabgleich ist nur zulässig, wenn die Meßketten der vermessenen Bauteile innerhalb der Toleranz einer geforderten Meßgenauigkeit liegen und innerhalb des für die jeweilige Meßkette gültigen Meßbereiches liegen (außerhalb eines unzulässigen Grenzbereiches). Außerdem ist sicherzustellen, daß das Meßwerterfassungssystem keine Aliasingeffekte oder sonstige systematischem Störungen aufweist.

In den Unteransprüchen sind vorteilhafte Weiterbildungen der Erfindung beschrieben.

Es wird vorgeschlagen, zunächst eine Position der Bauteile aus den Reihen von Meßwerten zu berechnen. Hierzu werden üblicherweise aus den Zahlenwerten der gemessenen Geschwindigkeiten bzw. Drehzahlen durch zeitliche Integration die dazugehörende Bewegung bzw. Umdrehungen berechnet. Aus den Zahlenwerten der gemessenen Beschleunigungen wird durch zweimalige zeitliche Integration die dazugehörende Bewegung bzw. Umdrehungen berechnet. Bei jeder dieser Integrationen fällt eine Integrationskonstante an, die durch die Randbedingungen bestimmt und auf geeignete Werte festgelegt wird. Hieraus ergibt sich ein Positionsabgleich der Bauteile. Auch hierzu ein Beispiel: mit der vorliegenden Erfindung kann der Drehwinkel bei ineinanderkämmenden Bauteilen, z.B. bei Synchronkupplungen, aus der Integration der Drehzahlen ermittelt werden. Die Integrationskonstanten werden so festgelegt, daß zu einem gewählten Zeitpunkt, zu dem die Bauteile ineinander kämmen, der Drehwinkel des ersten Bauteiles 0° beträgt und der Drehwinkel des zweiten Bauteils den passenden Teilungswinkel beträgt, also eine Durchdringung der Körper ausgeschlossen ist. Die Position der beiden Bauteile ist damit festgelegt.

Werden, wie vorgeschlagen, die Randbedingungen zum Ableich der Reihen von Meßwerten so gewählt, daß diese Randbedingungen im Bereich eines zu beobachtenden Ereignisses liegen, d.h. in diesem Bereich gültig sind, so wird die Genauigkeit genau dort erhöht, wo der Schwerpunkt der Betrachtung liegt. Als Randbedingungen können alle Bedingungen herangezogen werden, die die Auswertbarkeit und die Meßgenauigkeit erhöhen.

Zum Normieren der Meßwerte wird vorgeschlagen, eine der Reihen von Meßwerten zur Normierung heranzuziehen. Bei dieser Vorgehensweise ist der Standpunkt des Beobachters mit demjenigen Bauteil identisch, dessen Meßwerte, z.B. seiner Drehbewegung, zur Normierung verwendet wurden.

Alternativ wird vorgeschlagen, einen festen Wert für die Normierung zu verwenden. Bei dieser Vorgehensweise nimmt der Beobachter einen scheinbar festen Standpunkt ein. Von besonderem Vorteil ist es, wenn darüber hinaus dieser feste Wert aus einer der Reihen von Meßwerten ausgewählt wird, denn so entspricht dann der Standpunkt des Beobachters der Lage bzw. Bewegung eines beobachteten Bauteiles zu einem festen Zeitpunkt. Somit werden Geschwindigkeits- und Richtungsänderungen relativ zum Bezugsystem des beobachteten, bewegten Bauteiles besonders gut sichtbar.

Zusätzlich zu den gemessenen Kenngrößen kann unter Ausnutzung geometrischer und physikalischer Randbedingungen die Position von weiteren Bauteilen mit hoher Genauigkeit abgeschätzt und mit der gleichen Methode ermittelt werden.

Zur gemeinsamen Darstellung der Reihen von normierten Meßwerten wird vorgeschlagen, diese als zeitlich parallele Linien in Diagrammform darzustellen. Damit ist es möglich, die verschiedenen Reihen von Meßwerten unmittelbar gegenüberzustellen und damit eine Auswertung der Messung vorzunehmen.

Alternativ wird vorgeschlagen, zur Darstellung fotorealistische Computergraphiken oder Abbildungen der beobachteten Bauteile zu verwenden, die mit Hilfe der Reihen von normierten Meßwerten bewegt, d.h. animiert werden. Hierbei ist es von besonderem Vorteil, daß auch komplexe Vorgänge mit unterschiedlichen Bewegungen, z.B. kombinierte Dreh- und Längsbewegungen, anschaulich und gleichzeitig darstellbar sind, so daß die Auswertung der Messung deutlich verbessert ist. Die optische Darstellung erlaubt eine zusätzliche Plausibilitätskontrolle aller gemessenen Kenngrößen und liefert ein tieferes Verständnis für den gemessenen Vorgang. Durch die perspektivisch richtige Darstellung der Geometrie können kritische Berührungsstellen erkannt und daraus Anhaltspunkte für konstruktive Maßnahmen gewonnen werden.

Bei dieser Art der Darstellung ist es möglich, die optischen Eigenschaften der zur Darstellung verwendeten Objekte zu verändern bzw. so zu wählen, daß zusätzliche Informationen gewonnen werden können. So erlaubt z.B. eine transparente oder aufgeschnittene Darstellung einer Schiebemuffe die Sicht auf darunterliegende Bauteile bzw. die Sicht in den Eingriffsbereich der Verzahnungen.

Auch eine vergleichende Betrachtung von verschiedenen Vorgängen ist möglich, sei es in zeitlicher Abfolge (um die Folgen der Abnutzung zu ermitteln) oder nach konstruktiven Änderungen, indem verschiedene Darstellungen gespeichert und danach zeitlich parallel wiedergegeben werden. Besonders geeignet ist das vorgeschlagene Verfahren für den Vergleich von Simulation und Messung, da nun für die Darstellung die gleiche Methode herangezogen wird. Aus demselben Grund ist es nun auch besonders einfach, die Ergebnisse der Messung in ein CAD-System bzw. eine CAD-Darstellung einzubinden.

Nicht zu unterschätzen ist auch, daß diese anschauliche Art der Darstellung das Verständnis der beobachteten Bewegunbgsabläufe erheblich erleichtert, visuelle Hinweise auf Bewegungsdynamik und Berührstellen gibt und die rasche Einarbeitung in die Thematik erleichtert. Aus diesem Verständnis entstehen Denkanstöße für Lösungsansätze und letztendlich für geeignete Gegenmaßnahmen.

Die ferner vorgeschlagene Anwendung des dargestellten Verfahren zur Messung der Relativbewegung bei der Bewegung einer Synchronisierung einer Kupplung ist deshalb von besonderem Vorteil, weil der Vorgang einer Synchronisierung überlagerte Dreh- und Schiebebewegungen von mehreren Bauteilen aufweist, nämlich der Bewegungen der Bauteile Ritzelwelle, Losrad und Schiebemuffe. Das Bauteil Ritzelwelle schließt einen hiermit verbundenen Synchronring mit ein. Diese Bewegungen sind durch die Form der Bauteile geometrische Randbedingungen unterworfen und eine Auswertung der Messung ist nur unter gleichzeitiger Berücksichtigung aller Bewegungen möglich. So wird im Rahmen der hier vorgeschlagenen Anwendung als Randbedingung für das Verknüpfen der Reihen von Meßwerten davon ausgegangen, daß die Drehzahlen von Ritzelwelle, Festrad und Losrad im eingekuppelten Zustand identisch sind und daß die Lage der Schiebemuffe im eingekuppelten Zustand bekannt ist.

Die vorgeschlagene Anwendung läßt sich besonders hinsichtlich der Darstellung und der Auswertbarkeit der Messung dadurch weiter verbessern, daß die Normierung der Drehzahlen von Ritzelwelle und Losrad auf der Grundlage einer der beiden Drehzahlen erfolgt. Die Darstellung der Bauteilbewegung erfolgt relativ zu einer normierten Bewegung. Durch die Normierung erscheint das Bauteil, dessen Reihe von Meßwerten zur Normierung verwendet wird, als stillstehend, so daß die Bewegungen der anderen Bauteile besonders genau beobachtet werden kann, was insbesondere im Bereich der endgültigen Synchronisierung von Vorteil ist.

In diesem Zusammenhang hat es sich als besonders vorteilhaft erwiesen, wenn für die Normierung nicht eine Reihe von Meßwerten, sondern die Drehzahl der Kupplung, d.h. die Drehzahl eines ihrer Bauteile, im eingekuppelten Zustand als fester Meßwert herangezogen wird. Standpunkt des Beobachters ist nun die Synchrondrehzahl, so daß Bewegungen sowohl der mit der Fahrzeugmasse verbundenen Ritzelwelle wie auch des Losrades beim eigentlichen Synchronisiervorgang dargestellt werden. Hierbei ist es insbesondere auch möglich, eine Schwingung der Ritzelwelle darzustellen bzw. zu erkennen. Dei der Darstellung scheinen die Bauteile in den Vorgang der Synchronisierung regelrecht hineinzulaufen.

Insgesamt ist mit der vorliegenden Erfindung ein Verfahren, besonders aber auch eine Anwendung hierzu, geschaffen, das sowohl bei Neuentwicklungen wie auch bei der Behebung von Serienproblemen von großem Nutzen ist. Die Identifizierung von Ursachen, das Erkennen der Wirkungsmechanismen und die Entwicklung von Abhilfemaßnahmen können hiermit rasch vollzogen werden.

Die Erfindung ist nachstehend anhand eines in den Figuren dargestellten Ausführungsbeispieles näher beschrieben. Es zeigen:

- Fig. 1 eine Ansicht eines Systemes zur Messung und Darstellung des Vorganges einer Synchronisierung bei einem schaltbetriebenen Fahrzeuges,
- Fig. 2 ein Ablaufdiagramm des Verfahrens zur Ermittlung der Relativbewegung der beteiligten Bauteile,
- Fig. 3 Schema für die Meßgenauigkeit und Toleranz von Meßketten
- Fig. 4 den Drehwinkelbereich des Synchronringes relativ zur Bewegung der Schiebemuffe,
- Fig. 5 eine fotorealistische Darstellung der beobachteten Bauteile einer Synchroneinrichtung, wie sie im dargestellten Verfahren zur Messung verwendet werden.

In der Ansicht nach Fig. 1 ist ein Teilbereich eines synchronisierten Fahrzeuggetriebes 1 mit einer Synchronisiereinrichtung 2 dargestellt. Die Synchronisiereinrichtung 2 besteht aus der Ritzelwelle 3, einem Losrad 4 sowie einer Schiebemuffe 5. Die Schiebemuffe 5 ist zur besseren Einsicht teilweise aufgeschnitten dargestellt und zeigt die darunterliegende Verzahnung und einen Synchronring 17, der auf einem mit der Ritzelwelle 3 verbundenen Synchronkörper (nicht dargestellt) axial beweglich gehalten ist. Die Schiebemuffe 5 wird durch eine Schaltgabel 6 bewegt. Am Losrad 4 ist ein Kupplungskörper 19 vorgesehen, auf den sich die Schiebemuffe 5 aufschieben läßt, so daß bei eingelegtem Gang, d.h. vollständig aufgeschobener Schiebemuffe 5, Ritzelwelle 3 und Losrad 4 drehfest verbunden sind.

Zur Reduzierung des Aufwandes für die Sensorbestückung wird die Drehzahl der Schiebemuffe 5 bzw. der Ritzelwelle 3 an einem damit drehfest verbundenen Zahnrad 16 mit einem Drehimpulsgeber 8 gemessen. Zur Messung der Drehzahl des Losrades 4 ist ein Drehimpulsgeber 7 vorgesehen. Beide Drehimpulsgeber 7, 8 wirken mit Verzahnungen zusammen, nämlich der Verzahnung des Zahnrades 16 bzw. der Verzahnung des Losrades 4. Mit der Schaltgabel 6 ist ein Wegsensor 9 verbunden. Die an der Schaltgabel 6 anliegenden Kräfte werden mit angeklebten Dehnmeßstreifen 12 und 13 ermittelt. Die Signale der Dehnmeßstreifen werden mit geeigneten Meßverstärkern 14 und 15 aufbereitet. Die Signale der Drehimpulsgeber 7 und 8, des Weggebers 9 und der Dehnmeßstreifen 12 und 13 nach Aufbereitung in den Meßverstärkern 14, 15 werden durch ein Aufzeichnungsgerät 10 erfaßt und zwischengespeichert oder direkt in eine Auswerteeinrichtung 11, hier eine Recheneinheit mit Bildschirm, eingespeist und hier ebenfalls gespeichert.

In der Recheneinheit 11 läuft das in Fig. 2 als Ablaufdiagramm dargestellte Verfahren zur Messung der Relativbewegung von Losrad 4, Ritzelwelle 3 (d.h. Synchronring 17) und Schiebemuffe 5 (d.h. Schaltgabel 16) ab. In einem ersten **Schritt 20** werden nun zunächst die zugehörigen Meßwerte, nämlich Drehzahl der Ritzelwelle $n_{Ri}$. Drehzahl des Losrades $n_L$, Weg der Schiebemuffe s und die an der Schaltgabel anliegende Kraft, als Reihen von Meßwerten meßtechnisch erfaßt. Dabei ist zu beachten, daß die Signalaufbereitung durch geeignete Tiefpaßfilter vor Signalrauschen und Aliasingeffekte zu schützen ist. Für eine gute Winkelberechnung sind möglichst hohe Tiefpaßfilter und hohe Abtastraten (z.B. 1000 Messungen pro Sekunde) empfehlenswert.

Im folgenden **Schritt 21** erfolgt die Aufarbeitung der Drehzahlsignale und die Ermittlung der Drehwinkel. Hierzu gilt es den meßtechnisch bedingten Offsetfehler vor allem der Drehzahlsignale möglichst gering zu halten. Es wird vorgeschlagen folgende Randbedingung zu nutzen:

- bei eingelegten Gang sind die Drehzahlen von Ritzelwelle 3 und Losrad 4 identisch
- bei eingelegten Gang kämmen die Verzahnungen von Kupplungskörper 19 und Schiebemuffe 5 ineinander ein, ohne sich gegenseitig zu durchdringen, so daß die relative Winkelposition von Kupplungskörper 19 und Schiebemuffe 5 bekannt ist.

Im **Schritt 21** wird darüber hinaus bestimmt, wann der Synchronpunkt erreicht ist, d.h. wann die Ritzelwelle 3 und das Losrad 4 durch die Schiebemuffe 5 fest miteinander verbunden sind und die Synchronisierung erfolgt ist:

Zur Bestimmung des Synchronpunktes wird berücksichtigt, daß die Schiebemuffe 5 über den Synchronkörper 18 mit der Ritzelwelle 3 stets drehfest verbunden ist. Zwischen der Schiebemuffe 5 und dem Losrad 4 wirkt die an sich bekannte Synchronisiereinrichtung 2 in der Weise, daß bei unterschiedlichen Drehzahlen zwischen Schiebemuffe 5, und damit auch der Ritzelwelle 3, und dem Losrad 4 zunächst nur eine kraftschlüssige Verbindung hergestellt und ein weiteres Aufschieben der Schiebemuffe 5 auf den Kupplungskörper 19 des Losrades 4 vermieden wird. Erst bei annähernd gleicher Drehzahl wird ein weiteres Aufschieben der Schiebemuffe 5 auf den Kupplungskörper 18 zugelassen, so daß nun eine formschlüssige und damit drehzahlgleiche Verbindung hergestellt werden kann.

Die Bestimmung des Synchronpunktes kann sowohl automatisch wie auch manuell erfolgen; bei automatischer Auswertung wird die Position der Schiebemuffe 5 oder ein gleicher Drehzahlverlauf von Ritzelwelle 3 und Losrad 4 als Indiz verwendet. Da die Messung der Position der Schiebemuffe 5 indirekt, nämlich über die Messung der Längsbewegung der Schaltgabel 6 erfolgt, ist es zu Verbesserung der Genauigkeit der Messung vorgesehen, auch eine eventuelle Durchbiegung der Schaltgabel 6 zu bestimmen. Hierzu sind an der Schaltgabel 6 die Dehnmeßstreifen 12 und 13 vorgesehen, die als Kraftsensoren die auf die Schaltgabel 6 ausgeübte Betätigungskraft erfassen. Die gemessene Schaltgabelkraft wird mit Hilfe einer weiteren Randbedingung (nämlich eine vorher durchgeführte Durchbiegungsmessung mit der Zuordnung Gabeldurchbiegung über der Schaltgabelkraft) in **Schritt 27** auf die dazugehörende Gabelbiegung zurückgerechnet. Die Gabeldurchbiegung wird schließlich in **Schritt 26** bei der Positionsermittlung der Schiebemuffe 5 berücksichtigt.

Nach dem Bestimmen des Synchronpunktes wird als Synchrondrehzahl $n_{Sync}$ die Drehzahl der Ritzelwelle im Synchronpunkt $n_{Ri}$ ($t=t_{Sync}$) sowie der Zeitpunkt des Synchronpunktes $t_{Sync}$ bestimmt.

Im **Schritt 21** wird die Tatsache verwendet, daß im Synchronisierpunkt sowohl die Position der Schiebemuffe 5 (vollständig eingerückt) wie auch das Verhältnis der Drehzahl der Ritzelwelle $n_{Ri}$ zur Drehzahl des Losrades $n_L$ ($n_{Ri} = n_L$) bekannt sind. Unter Berücksichtigung dieser bekannten Randbedingungen werden nunmehr die Meßwertreihen $n_{Ri}(t)$ und $n_L(t)$ verknüpft, indem ein Drehzahloffset als Differenz zwischen der Drehzahl $n_{Ri}$ der Ritzelwelle und der Drehzahl $n_L$ des Losrades im zeitlichen Bereich des Formschlußes bestimmt wird. Anschließend wird die Reihe der Meßwerte für die Drehzahl der Ritzelwelle $n_{Ri}(t)$ mit dem Drehzahloffset durch Addition modifiziert:

$$n_{Ri}'(t) = n_{Ri}(t) + [n_L - n_{Ri}]_{t>tSync}$$

Die Wirkung des vorstehend beschriebenen **Schrittes 21** kann am Diagramm nach Fig. 3 erläutert werden. Sowohl das Drehzahlsignal $n_{Ri}$ der Ritzelwelle wie auch das Drehzahlsignal $n_L$ des Losrades sind durch systematische Meßfehler mit einem Meßfehler behaftet. Im Diagramm nach Fig. 3 stellt sich dieser Meßfehler sowohl durch unterschiedliche Steigungen wie auch durch einen unterschiedlichen Offset der dargestellten Kennlinien der Drehzahlsignale dar. Durch die in **Schritt 21** durchgeführte Berichtigung wird nunmehr die Kennlinie für die Drehzahl $n_L$ des Losrades so verschoben, daß sie im Punkt der Synchrondrehzahl $n_{Sync}$ mit der Kennlinie für die Drehzahl $n_{Ri}$ der Ritzelwelle übereinstimmt. Damit ist im Bereich der Synchrondrehzahl $n_{Sync}$ und damit auch in dem Bereich, der für die Messung von größter Bedeutung ist, sichergestellt, daß der Fehler im Sinne einer Differenz zwischen den beiden Drehzahlsignalen $n_L$ und $n_{Ri}$ deutlich vermindert ist. Durch diese Maßnahme wird der absolute Meßfehler natürlich nicht vermindert, d.h. der Fehler der Anzeige des Drehzahlwertes ist weiterhin ausschließlich bei der Meßgenauigkeit des verwendeten Drehzahlsensors abhängig.

Im vorliegenden Fall dient die Messung vor allem zur Beobachtung der Signale in einem vergleichsweise kleinen Geschwindigkeitsbereich, nämlich im Bereich der Synchrondrehzahl $n_{Sync}$. Sollen die Signale, hier die Drehzahlsignale $n_L$ und $n_{Ri}$, hingegen über einen größeren Bereich hinweg miteinander verglichen werden, so ist es erforderlich, nicht nur wie in **Schritt 21** beschrieben und in Fig. 3 dargestellt die beiden Kennlinien durch Parallelverschiebung abzugleichen, sondern es muß eine Übereinstimmung in zumindest zwei Punkten der Kennlinie erzielt werden, so daß dann die Kennlinien in dem zu beobachteten Bereich sowohl hinsichtlich Offset wie auch hinsichtlich Steigung weitgehend übereinstimmen.

Im nächsten **Schritt 22** im Diagramm nach Fig. 2 werden die gemessenen und abgeglichenen Drehzahlsignale $n_L$ und $n_{Ri}$ zeitlich integriert und damit die Bewegung der Bauteile (Änderung der Drehwinkel) errechnet.

Eine weitere Randbedingung, nämlich daß die Schiebemuffe zum Zeitpunkt $t = t_{Sync}$ durchdringungsfrei in die Verzahnung des Kupplungskörpers 19 am Losrad 4 einkämmt, ermöglicht im Schritt 23 einen Drehwinkelabgleich. Zum Zeitpunkt $t = t_{Sync}$ befinden sich beide Bauteile in der theoretischen Position 0° (= konstruktive Nullage), die ein Einkämmen der Zähne gewährleistet. Hierbei, wie auch bei der Bestimmung der Position der anderen Bauteile, wird davon ausgegangen, daß die Körper rotationssymmetrisch und frei von Teilungsfehlern, Unwuchten oder Rundlauffehlern sind. Eine weitere Annahme ist, daß die axiale Position des Losrades 4 und damit des Kupplungskörpers 19 konstant ist. Die Betrachtung der gemessenen und berechneten Kenngrößen vor, während und nach dem Synchronzeitpunkt $t = t_{Sync}$ lassen somit auf den Schaltablauf, die Bewegungen und die Wechselwirkung der einzelnen Bauteile schließen.

In **Schritt 24** werden die Bewegungen von Bauteilen, die nicht meßtechnisch erfaßt werden können, ermittelt. Einen besonderen Vorteil bietet die beschriebene Methode auch bei der Darstellung von Bauteilen, deren Bewegung meßtechnisch nur sehr schwer erfassbar ist, deren Position jedoch aus geometrischen und physikalischen Randbedingungen abgeschätzt werden kann. Der Synchronring 17 der Synchronisierungseinheit 2 ist z.B. meßtechnisch schwer zugänglich, weil zum einen der Bauraum im Bereich des Synchronringes 17 sehr begrenzt ist und zum anderem sich die Schiebemuffe 5 während der Synchronisierungsphase über den Synchronring 17 schiebt und den Synchronring 17 überdeckt.

Folgende Randbedingungen können bei der Beschreibung der Bewegung des Synchronringes 17 herangezogen werden:

1. Im ungeschalteten Zustand ist die Position des Synchronringes 17 unrelevant, er kann deshalb in seiner "Mittellage" 0° (die konstruktive Nullage) positioniert werden.
2. Wenn die Gabel 2 die Schiebemuffe 5 in Richtung Losrad 4 bewegt, wird auch der Synchronring 17 in Richtung Losrad 4 zur Reibfläche bewegt. Dabei kann sowohl die Bewegung der Schiebemuffe 5, als auch die an der Schaltgabel 6 gemessene Axialkraft als Grundlage für die axiale Bewegung des Synchronringes 17 herangezogen werden.
3. Der Synchronring 17 kann sich axial nur solange bewegen, bis sich die Reibflächen berühren. Die Endlage des Synchronringes 17 wird durch eine vor der Messung durchgeführte Verschleißmessung ermittelt.
4. Der an der Schaltgabel 6 gemessene Anstieg der Axialkraft ist Indiz für die Berührung der Reibflächen. Der Synchronring 17 verdreht sich aufgrund der bestehenden Drehzahldifferenz und der Axilakraft bis zu seinem konstruktiv vorgegebenen Anschlag und sperrt dabei das Weiterschieben der Schiebemuffe 5.
5. Die Verdrehungsrichtung ist stets von der Drehzahldifferenz zwischen Losrad 4 und Schiebemuffe 5 bzw. Ritzelwelle 3 abhängig.
6. Während der Synchronisierungsphase ist eine weitere Verdrehung des Synchronringes 17 relativ zur Schiebemuffe 5 ausgeschlossen, wenn der Synchronring 17 den inneren Anschlag erreicht hat. Die Drehbewegung der Ritzelwelle 3, der Schiebemuffe 5 und damit des Synchronringes 17 sind in diesem Fall identisch.
7. Ist die Drehzahlgleichheit zwischen der Ritzelwelle 3, der Schiebemuffe 5 und dem Synchronring 17 erreicht, so folgt der Synchronring 17 auf Grund des Reibschlußes den Bewegungen des Losrades 4, jedoch nur innerhalb seines konstruktiv vorgegebenen Freiraumes. (Siehe Fig. 4)
8. Wenn die Gabel 2 die Schiebemuffe 5 weiter in Richtung Losrad 4 bewegt, so wird der Synchronring 17 relativ zur Schiebemuffe 5 verdreht, falls er nicht schon durch die Bewegung des Losrades 4 die Bewegung der Schiebemuffe 5 freigibt. Der Synchronring 17 muß der Schiebemuffe 5 "Platz machen", da eine Durchdringung beider Körper ausgeschlossen ist. (siehe auch Fig. 4)
9. Im geschalteten Zustand der Synchronisiereinrichtung 2 ist der Formschluß im Bereich des Kupplungskörpers 19 am Losrad 4 durch die axiale Position der Schiebemuffe 5 gewährleistet. Die Verdrehung kann dann z.B. in der Mittellage (0° = konstruktive Nullage) positioniert werden.

Die Bewegung des Synchronringes 17 läßt sich also durch mathematische Verknüpfung der Drehzahlen von Schiebemuffe 5 bzw. Ritzelwelle 3 und Losrad 4 sowie der axialen Gabelkraft und Bewegung der Schiebemuffe unter Berücksichtigung der Randbedingungen mit zufriedenstellender Genauigkeit ermitteln.

Für die weitere Auswertung wird eine geeignete Darstellungsform gewählt, die in der Lage ist, die interessierenden Bauteile (nämlich Synchronring 17, Kupplungskörper 19 vom Losrad 4 und Schiebemuffe 5) und deren Bewegungen gemeinsam abzubilden. Diese Darstellung wird im Ausführungsbeispiel auf einer als Personalcomputer ausgeführten Auswerteeinrichtung 11 mit Hilfe eines CAD-Programmes erzeugt. Fig. 5 zeigt die dreidimensionale Darstellung der Synchroneinheit 2, wie sie mit Hilfe der Auswerteeinrichtung 11 erzeugt wurde. Alle Bauteile der Synchroneinheit 2, die nicht zum weiteren Verständnis beitragen, können weggelassen werden. Die Darstellung der einzelnen Bauteile entsprecht in ihrer Geometrie den realen Abmessungen der Bauteile und wird in **Schritt 25** maßstäblich aus Zeichnungsdaten aufgebaut. Dieser **Schritt 25** kann unabhängig vom restlichen Auswerteverfahren durchgeführt werden.

In **Schritt 26** werden die Reihen von Meßwerten für das Drehzahlsignal $n_{Ri}(t)$ der Ritzelwelle, das Drehzahlsignal $n_L(t)$ des Losrades und das Wegsignal s(t) der Schiebemuffe zusammengeführt, indem mit Hilfe der Meßdaten eine Verdrehung bzw. Verschiebung der zugehörigen Bauteile (Objekte) im CAD-Programm durchgeführt wird. Auf diese Weise werden für jeden einzelnen Meßpunkt alle Objekte positioniert und ausgerichtet (Drehung, Verschiebung) und somit genauso bewegt wie das reale Objekt während der Messung. Im Rahmen der Zusammenführung der Meßdaten erfolgt eine Normierung der Reihen von Meßwerten, hier der Drehzahlsignale, mit Hilfe der Synchrondrehzahl $n_{Sync}$, indem der Wert der Synchrondrehzahl $n_{Sync}$ von den anderen Drehzahlsignalen subtrahiert wird. Hierdurch wird das Bezugssystem, in dem die Drehzahlsignale dargestellt sind, verändert: während die ursprünglichen Reihen von Meßwerten in einem Bezugssystem mit einer festen Position erfaßt wurden, liegt den normierten Reihen von Meßwerten ein Bezugssystem mit einer Drehzahl gleich der Synchrondrehzahl $n_{Sync}$ zugrunde. Im vorliegenden Fall bedeutet dies, daß in dem Bezugssystem, das nunmehr den normierten Reihen von Meßwerten zugrunde liegt, alle Bauteile bei Erreichen des Synchronisierpunktes stillstehen.

Sofern es sich um ein CAD-Programm handelt, das mit dreidimensionalen Objekten arbeiten kann, ist neben einer Bewegung der Darstellung durch die Meßdaten auch eine Veränderung des Betrachtungswinkels der Darstellung möglich: drehen, verschieben oder zoomen.

Zur genauen Bestimmung der Lage der Bauteile können durch Vermessung vor dem Prüflauf zusätzlich Lagetoleranzen, Verschleißzustand und die tatsächliche Einbaulage bestimmt werden.

Sind weitere Randbedingungen bekannt, so lassen sich in einem dem **Schritt 26** vorgeschalteten **Schritt 27** auch plastische oder elastische Verformungen (z.B. durch Kraft verursachte Biegung) in die Darstellung der Objekte einarbeiten.

Nachdem an dieser Stelle Position und Bewegung aller beteiligter Bauteile bekannt sind, kann in den nun folgenden Schritten ein gemeinsames Darstellen der beteiligten Bauteile und damit der normierten Reihen von Meßwerten erfolgen.

In **Schritt 28** erfolgt eine fotorealistische Bildberechnung mit Hilfe geeigneter "Raytracing-Software" oder "CAD-Software", die die Computermodelle mit Oberflächeneigenschaften, Licht und Schatten perspektivisch richtig darstellen. Alternativ kann die Darstellung auch auf flächenorientierte Umrißmodelle erfolgen, die jedoch den Informationsgehalt schmälern, weil dadurch Information über die Kontaktgeometrie verloren gehen kann. Mittels dieser "Raytracing-Software" oder "CAD-Software" wird für jeden Meßpunkt ein Einzelbild aus den positionierten Bauteilobjekten erzeugt.

In **Schritt 29** werden, nachdem aus einem Meßzyklus alle Einzelbilder vorliegen, die Einzelbilder mit geeigneter Software zu einem Film bzw. einer "Computeranimation" zusammengebunden, die dann in **Schritt 30** entweder mit Hilfe eines Abspielprogrammes auf einer Benutzeroberfläche (PC, Workstation etc.). oder in **Schritt 31** nach Konvertierung auf einem Videodatenträger dargestellt werden. Selbstverständlich können die letztgenannten Bearbeitungsschritte zur Animation auch gemeinsam oder mittels anderer oder eines einzigen geeigneten Programmes durchgeführt werden.

Der besondere Vorteil der aufgezeigten Vorgehensweise liegt nun im Falle des Ausführungsbeispieles darin, daß der äußerst komplexe Vorgang des Synchronisierens von einem Standpunkt aus betrachtet werden kann, die der Beobachter normalerweise nicht zugänglich ist. Da im Ausführungsbeispiel, (Fig. 4) die Darstellung der Schiebemuffe 5 im Bereich des Zahngrundes geschnitten wurde, kann auf dem Bildschirm das Eingreifen der verschiedenen Verzahnungen während des Synchronisierungsvorganges in idealer Weise verfolgt werden und die Ermittlung möglicher Fehler und Fehlerursachen wird deutlich erleichtert. Dadurch, daß als fester Beobachtungspunkt die Synchrondrehzahl $n_{sync}$ gewählt ist (vergleiche Schritt 26), ist es im Unterschied zu anderen Meßverfahren möglich, die Bewegungen des Losrades 4, der mit der Fahrzeugmasse verbundene Ritzelwelle 3 und der Schiebemuffe 5 gleichzeitig darzustellen. So konnten bei einer Anwendung des vorgestellten Meßverfahrens Schwingungen der Ritzelwelle 3 um die Synchrondrehzahl $n_{Sync}$ herum festgestellt werden, während bisher allgemein angenommen wurde, daß die Drehzahl der Ritzelwelle $n_{Ri}$ wegen ihrer großen, mit der Trägheit des Fahrzeuges verbundenen Drehmasse konstant sei.

Das dargestellte Meßverfahren ist selbstverständlich nicht auf die Meßdarstellung der Relativbewegung der Bauteile von Kupplungen beschränkt, sondern kann vorteilhafter Weise überall dort eingesetzt werden, wo verschiedene Bauteile mit überlagerten Bewegungen beobachtet werden sollen, wie beispielsweise bei der Bewegung von Schaltgabeln mit Hilfe einer Schaltwalze, der Vermessung von Getriebe-Verspannungen unter Last oder Abdrängungsmessungen von Zahnrädern. Besonders bei Meßaufgaben mit vielen Kenngrößen, mit der Erfassung von Wegen, Kräften und Geschwindigkeiten örtlich getrennter Bauteile, besteht die Möglichkeit die Bauteile als Computermodell direkt nebeneinanderzulegen und so die gegenseitige Wechselwirkung zu beurteilen.

Die Gefahr der Fehlinterpretation ist gering, weil eine fehlerhafte Positionierung eines Objektes durch die sehr anschauliche Darstellung sofort auffällige Bewegungsabläufe, Körperduchdringungen oder Richtungsänderungen ohne sichtbaren Körperkontakt verursachen würde. Die optische Darstellung in Form einer Computeranimation erlaubt somit eine zusätzliche Plausibilitätskontrolle aller gemessenen Kenngrößen und liefert ein tieferes Verständnis für die vermessenen Vorgang.

**Patentansprüche**

1. Verfahren zur Messung der Relativbewegung von zumindest zwei Bauteilen (3, 4) mit folgenden Schritten:

   - Erfassen (20) von Reihen von Meßwerten der Bewegung der Bauteile,
   - Abgleichen (21) zumindest zweier Reihen von Meßwerten durch Vergleichen der Meßwerte an zumindest einem Punkt, an dem als Randbedingung das Verhältnis der Bewegungen der zu den Reihen von Meßwerten gehörenden Bauteile (3,4) zueinander bekannt ist,
   - Berechnen (26) von Position und Ausrichtung aller Bauteile in einem Bezugssystem unter Normierung der Reihen von Meßwerten,
   - gemeinsames Darstellen (28, 29) der normierten Reihen von Meßwerten.

2. Verfahren nach Anspruch 1, **dadurch gekennzeichnet, daß** nach dem Abgleichen (21) zunächst eine Berechnung (22) der Position der Bauteile, z. B. durch Integration der Geschwindigkeiten, und dann ein Positionsabgleich (23) zumindest zweier Bauteile zu einem geeigneten Zeitpunkt unter Verwendung bekannter Randbedingungen, relativer Lagen und konstruktiven Abmessungen erfolgt.

3. Verfahren nach Anspruch 2, **dadurch gekennzeichnet, daß** das Abgleichen (21) und der Positionsabgleich (23) an einem Punkt im Bereich eines zu beobachtenden Ereignisses erfolgt.

4. Verfahren nach Anspruch 1, 2 oder 3, **dadurch gekennzeichnet, daß** zur Normierung (26) eine der Reihen von Meßwerten verwendet wird.

5. Verfahren nach Anspruch 1, 2 oder 3, **dadurch gekennzeichnet, daß** zur Normierung (26) ein Meßwert ($n_{sync}$)aus einer der Reihen von Meßwerten verwendet wird.

6. Verfahren nach einem der Ansprüche 1 bis 4, **dadurch gekennezeichnet,** daß zusätzlich zur Berechnung (22) der position der Bauteile eine Abschätzung (24) und Berechnung der Lage und Ausrichtung meßtechnisch nicht erfaßter Bauteile erfolgt.

7. Verfahren nach einem der Ansprüche 1 bis 5, **dadurch gekennzeichnet, daß** zum gemeinsamen Darstellen (28, 29) der Reihen von normierten Meßwerten diese als zeitlich parallele Linien in Diagrammform dargestellt werden.

8. Verfahren nach einem der Ansprüche 1 bis 6, **dadurch gekennzeichnet, daß** zum gemeinsamen Darstellen (28, 29) der Reihen von normierten Meßwerten Abbildungen der Bauteile erzeugt werden (25), nachfolgend die Abbildungen anhand der jeweiligen Reihen von normierten Meßwerten zur Erzeugung von Einzelbildern für jeden Meßpunkt positioniert (26) werden und schließlich die Einzelbilder zu einer Bildsequenz zusammengefügt (29) werden.

9. Verfahren nach Anspruch 8, **dadurch gekennzeichnet, daß** zur Abbildung der Bauteile (25) zweimensionele oder dreidimensionale Computermodelle, die in ihrer Geometrie den realen Abmessungen der Einzelbauteile maßstäblich nachgebildet sind, verwendet werden.

10. Anwendung des Verfahrens nach einem der voranstehenden Ansprüche zur Messung der Bewegungen einer Synchronisierung einer Kupplung mit den Bauteilen Festrad (3), Losrad (4) und Schiebemuffe (5), wobei

    - die Längsbewegung (s) der Schiebemuffe, die Drehzahl des Festrades ($n_{Ri}$) und die Drehzahl des Losrades ($n_L$) als Reihen von Meßwerten erfaßt werden
    - die Reihe der Meßwerte für die Längsbewegung der Schiebemuffe mit Hilfe der Randbedingung modifiziert wird, daß die Lage der Schiebemuffe im eingekuppelten Zustand bekannt ist,
    - die Reihen der Meßwerte für die Drehzahlen mit Hilfe der Randbedingung modifiziert wird, daß die Drehzahlen von Festrad und Losrad im eingekuppelten Zustand gleich sind.

11. Anwendung des Verfahrens nach einem der voranstehenden Ansprüche zur Messung der Bewegungen einer Synchronisierung einer Kupplung mit den Bauteilen Festrad (3), Losrad (4) und Schiebemuffe (5), wobei

    - für die Normierung (26) eine Reihe von Meßwerten der Drehzahl entweder des Festrades ($n_{Ri}$) oder des Losrades ($n_L$) verwendet wird
    - die Reihen der Meßwerte für die Drehzahlen von Losrad und Festrad mit diesem Meßwert normiert werden.

**12.** Anwendung des Verfahrens nach einem der voranstehenden Ansprüche zur Messung der Bewegungen einer Synchronisierung einer Kupplung mit den Bauteilen Festrad (3), Losrad (4) und Schiebemuffe (5), wobei

- für die Normierung (26) ein Meßwert der Drehzahl entweder des Festrades ($n_{Ri}$) oder des Losrades ($n_L$) im eingekuppelten Zustand verwendet wird
- die Reihen der Meßwerte für die Drehzahlen von Losrad und Festrad mit diesem Meßwert ($n_{sync}$) normiert werden.

**13.** Anwendung des Verfahrens nach einem der voranstehenden Ansprüche zur Messung der Bewegungen einer Synchronisierung einer Kupplung mit den Bauteilen Festrad (3), Losrad (4) und Schiebemuffe (5), wobei

- zum gemeinsamen Darstellen (28, 29) der Reihen von Meßwerten das Festrad, das Losrad und die Schiebemuffe auf einem Darstellungssystem dargestellt und mit Hilfe der zugehörigen, normierten Reihen von Meßwerten animiert werden.

## Claims

**1.** A method of measuring the relative movement of at least two components (3, 4), with the following steps:

- detection (2) of series of measured values of the movement of the components,
- equalization (21) of at least two series of measured values by comparison of the measured values at at least one point at which the ratio of the movements of the components (3, 4) belonging to the series of measured values to one another is known as a marginal condition,
- calculation (26) of the position and orientation of all the components in a reference system with standardization of the series of measured values,
- common illustration (28, 29) of the standardized series of measured values.

**2.** A method according to Claim 1, **characterized in that** after the equalization (21) a calculation (22) of the position of the components first takes place, for example by integration of the speeds, and then a position equalization (23) of at least two components takes place at a suitable moment whilst using known marginal conditions, relative positions and structural dimensions.

**3.** A method according to Claim 2, **characterized in that** the equalization (21) and the position equalization (23) take place at a moment in the range of a result to be observed.

**4.** A method according to Claim 1, 2 or 3, **characterized in that** one of the series of measured values is used for the standardization (26).

**5.** A method according to Claim 1, 2 or 3, **characterized in that** a measured value ($\mathbf{n_{sync}}$) from one of the series of measured values is used for the standardization (26).

**6.** A method according to one of Claims 1 to 4, **characterized in that** in addition to the calculation (22) of the position of the components an assessment (24) and calculation of the position and orientation of components not detected by measurement takes place.

**7.** A method according to one of Claims 1 to 5, **characterized in that** for the common illustration (28, 29) of the series of standardized measured values the latter are illustrated in a diagrammatic form as lines parallel in time.

**8.** A method according to one of Claims 1 to 6, **characterized in that** for the common illustration (28, 29) of the series of standardized measured values illustrations of the components are produced (25), then the illustrations are positioned (26) with reference to the respective series of standardized measured values in order to produce individual images for each measurement point, and finally the individual images are assembled (29) to form a sequence of images.

**9.** A method according to Claim 8, **characterized in that** two-dimensional or three-dimensional computer models, which in their geometry imitate the actual dimensions of the individual components in a true-to-scale manner, are used to illustrate the components (25).

**10.** Use of the method according to one of the preceding Claims for measuring the movements of a synchronization of a coupling with the components comprising a fixed wheel (3), a loose wheel (4) and a sliding sleeve (5), wherein

- the longitudinal movement (**s**) of the sliding sleeve, the rotational speed of the fixed wheel ($\mathbf{n_{Ri}}$) and the rotational speed of the loose wheel ($\mathbf{n_L}$) are detected as series of measured values,

- the series of measured values for the longitudinal movement of the sliding sleeve is modified by means of the marginal condition that the position of the sliding sleeve in the coupled state is known,
- the series of measured values for the rotational speeds is modified by means of the marginal condition that the rotational speeds of the fixed wheel and the loose wheel in the coupled state are equal.

**11.** Use of the method according to one of the preceding Claims for measuring the movements of a synchronization of a coupling with the components comprising a fixed wheel (3), a loose wheel (4) and a sliding sleeve (5), wherein

- a series of measured values of the rotational speed either of the fixed wheel ($\mathbf{n_{Ri}}$) or of the loose wheel ($\mathbf{n_L}$) is used for the standardization (26),
- the series of the measured values for the rotational speeds of the loose wheel and the fixed wheel are standardized with this measured value.

**12.** Use of the method according to one of the preceding Claims for measuring the movements of a synchronization of a coupling with the components comprising a fixed wheel (3), a loose wheel (4) and a sliding sleeve (5), wherein

- a measured value of the rotational speed either of the fixed wheel ($\mathbf{n_{Ri}}$) or of the loose wheel ($\mathbf{n_L}$) in the coupled state is used for the standardization (26),

- the series of measured values for the rotational speeds of the loose wheel and the fixed wheel are standardized with this measured value ($\mathbf{n_{sync}}$).

**13.** Use of the method according to one of the preceding Claims for measuring the movements of a synchronization of a coupling with the components comprising a fixed wheel (3), a loose wheel (4) and a sliding sleeve (5), wherein

- the fixed wheel, the loose wheel and the sliding sleeve are illustrated on an illustration system for the common illustration (28, 29) of the series of measured values and are animated with the aid of the associated standardized series of measured values.

**Revendications**

**1.** Procédé de mesure du mouvement relatif d'au moins deux composants (3, 4) comportant les étapes suivantes

- détection (20) de séries de valeurs de mesure du mouvement des composants,
- égalisation (21) d'au moins deux séries de valeurs de mesure par comparaison des valeurs de mesure en au moins un point auquel on connaît, en tant que condition marginale, le rapport des mouvements des composants (3, 4) faisant partie des séries de valeurs de mesure, l'un par rapport à l'autre,
- calcul (26) de la position et de l'orientation de tous les composants dans un système de référence avec normalisation de séries de valeurs de mesure,
- représentation (28, 29) commune des séries normalisées des valeurs de mesure.

**2.** Procédé selon la revendication 1, **caractérisé en ce qu'**après égalisation (21) il est procédé d'abord à un calcul (22) de la position des composants, par exemple par intégration des vitesses, puis à une égalisation de position (23) d'au moins deux composants à un instant approprié, par utilisation de conditions marginales connues, de positions relatives et de dimensions de construction.

**3.** Procédé selon la revendication 2, **caractérisé en ce que** l'égalisation (21) et l'égalisation de position (23) s'effectuent en un point dans la zone de l'événement à observer.

**4.** Procédé selon la revendication 1, 2 ou 3, **caractérisé en ce que** pour la normalisation (26) on utilise l'une des séries de valeurs de mesure.

**5.** Procédé selon la revendication 1, 2 ou 3, **caractérisé en ce que** pour la normalisation (26), on utilise une valeur de mesure ($n_{sync}$) de l'une des séries des valeurs de mesure.

**6.** Procédé selon l'une des revendications 1 à 4, **caractérisé en ce qu'**en plus du calcul (22) de la position des composants, il est procédé à une estimation (24) et à un calcul de la position et de l'orientation de composants non détectés par une technique de mesure.

**7.** Procédé selon l'une des revendications 1 à 5, **caractérisé en ce que** pour la représentation commune (28, 29) des séries de valeurs de mesure normalisées, celles-ci sont représentées en tant que lignes parallèles dans le temps sous la forme d'un diagramme.

**8.** Procédé selon l'une des revendications 1 à 6, **caractérisé en ce que** pour la représentation commune (28, 29) des séries de valeurs de mesure normalisées, on produit des reproductions des composants (25), les reproductions sont ensuite positionnées, à l'aide des séries respectives des valeurs de mesure normalisées pour produire des images individuelles pour chaque point de mesure, et les images individuelles sont enfin assemblées (29) en une séquence d'images.

**9.** Procédé selon la revendication 8, **caractérisé en ce que** pour la reproduction des composants (25), on utilise des modèles d'ordinateurs en deux ou trois dimensions qui, dans leur géométrie, simulent à l'échelle les dimensions réelles des composants individuels.

**10.** Mise en oeuvre du procédé selon l'une des revendications précédentes pour mesurer les mouvements d'une synchronisation d'un accouplement avec les composants roue fixe (3), roue libre (4) et manchon coulissant (5),

- le mouvement longitudinal (s) du manchon coulissant, la vitesse de rotation de la roue fixe ($n_{Ri}$) et la vitesse de rotation de la roue libre ($n_L$) sont détectés en tant que séries de valeurs de mesure,
- la série des valeurs de mesure pour le mouvement longitudinal du manchon coulissant est modifiée à l'aide de la condition marginale selon laquelle la position du manchon coulissant est connue à l'état accouplé,
- la série des valeurs de mesure pour les vitesses de rotation est modifiée à l'aide de la condition marginale selon laquelle les vitesses de rotation de la roue fixe et de la roue libre sont identiques à l'état accouplé.

**11.** Mise en oeuvre du procédé selon l'une des revendications précédentes, pour mesurer les mouvements d'une synchronisation d'un accouplement avec les composants roue fixe (3), roue libre (4) et manchon coulissant (5),

- pour la normalisation (26), on utilise une série de valeurs de mesure de la vitesse de rotation soit de la roue fixe ($n_{Ri}$), soit de la roue libre ($n_L$),
- les séries de valeurs de mesure pour les vitesses de rotation de la roue libre et de la roue fixe sont normalisées avec cette valeur de mesure.

**12.** Mise en oeuvre du procédé selon l'une des revendications précédentes, pour mesurer les mouvements d'une synchronisation d'un accouplement avec les composants roue fixe (3), roue libre (4) et manchon coulissant (5),

- pour la normalisation (26), on utilise une valeur de mesure de la vitesse de rotation soit de la roue fixe ($n_{Ri}$), soit de la roue libre ($n_L$) à l'état accouplé,
- les séries de valeurs de mesure pour les vitesses de rotation de la roue libre et de la roue fixe sont normalisées avec cette valeur de mesure ($n_{sync}$).

**13.** Mise en oeuvre du procédé selon l'une des revendications précédentes, pour mesurer les mouvements d'une synchronisation d'un accouplement avec les composants roue fixe (3), roue libre (4) et manchon coulissant (5),

- pour la représentation commune (28, 29) des séries de valeurs de mesure, la roue fixe, la roue libre et le manchon coulissant sont représentés sur un système de représentation et sont animés à l'aide des séries normalisées correspondantes de valeurs de mesure.

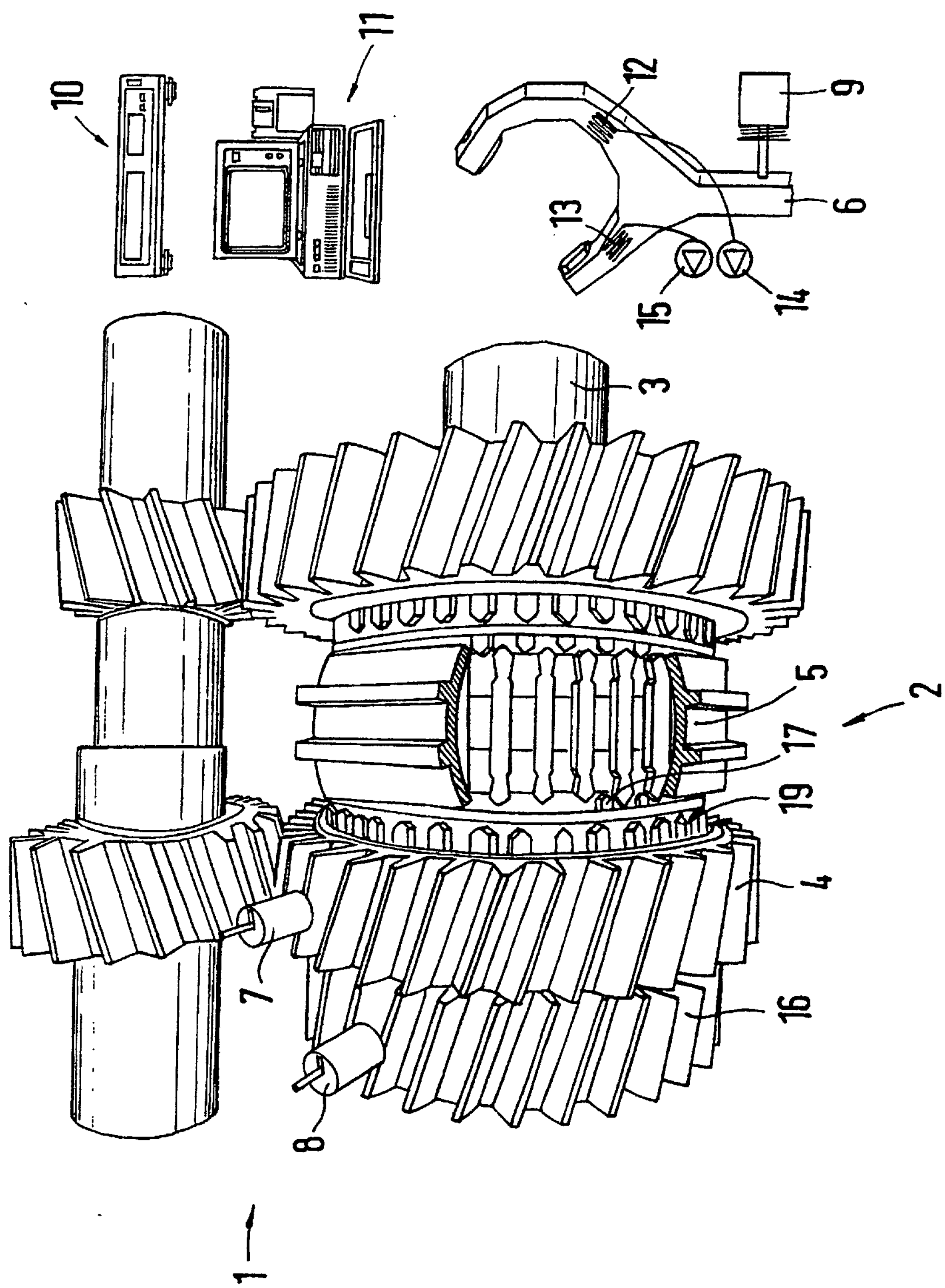


Fig.1

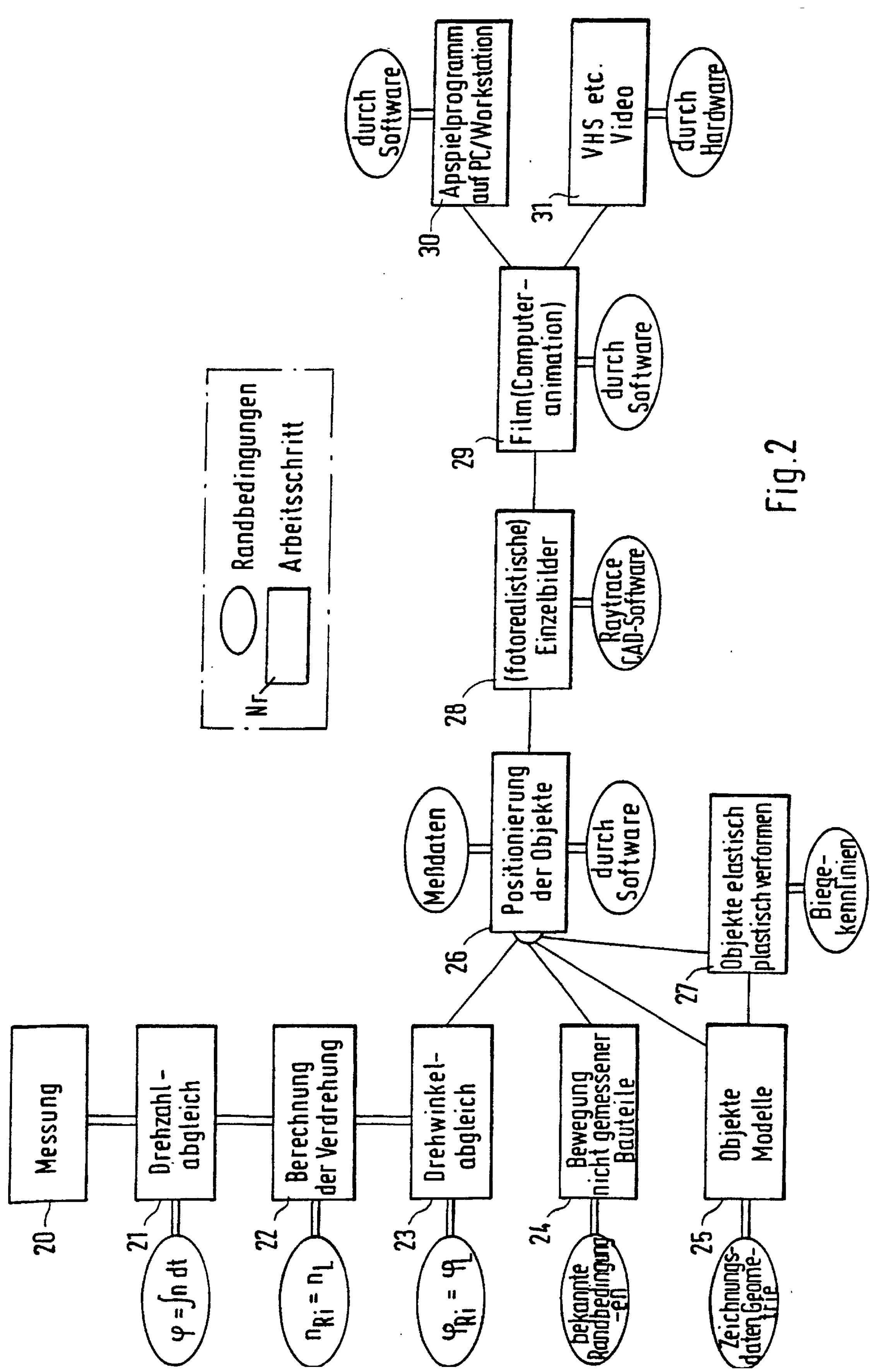
Messung
Drehzahl-abgleich
Berechnung der Verdrehung
Drehwinkel-abgleich
Bewegung nicht gemessener Bauteile
Objekte Modelle
$\varphi = \int n \, dt$
$n_{Ri} = n_L$
$\varphi_{Ri} = \varphi_L$
bekannte Randbedingungen
Zeichnungsdaten Geometrie
20
21
22
23
24
25
26
27
28
29
30
31
Positionierung der Objekte
Meßdaten
durch Software
Objekte elastisch plastisch verformen
Biege-kennlinien
(fotorealistische) Einzelbilder
Raytrace CAD-Software
Film (Computer-animation)
durch Software
Apspielprogramm auf PC/Workstation
durch Software
VHS etc. Video
durch Hardware
Randbedingungen
Nr.
Arbeitsschritt

Fig. 2

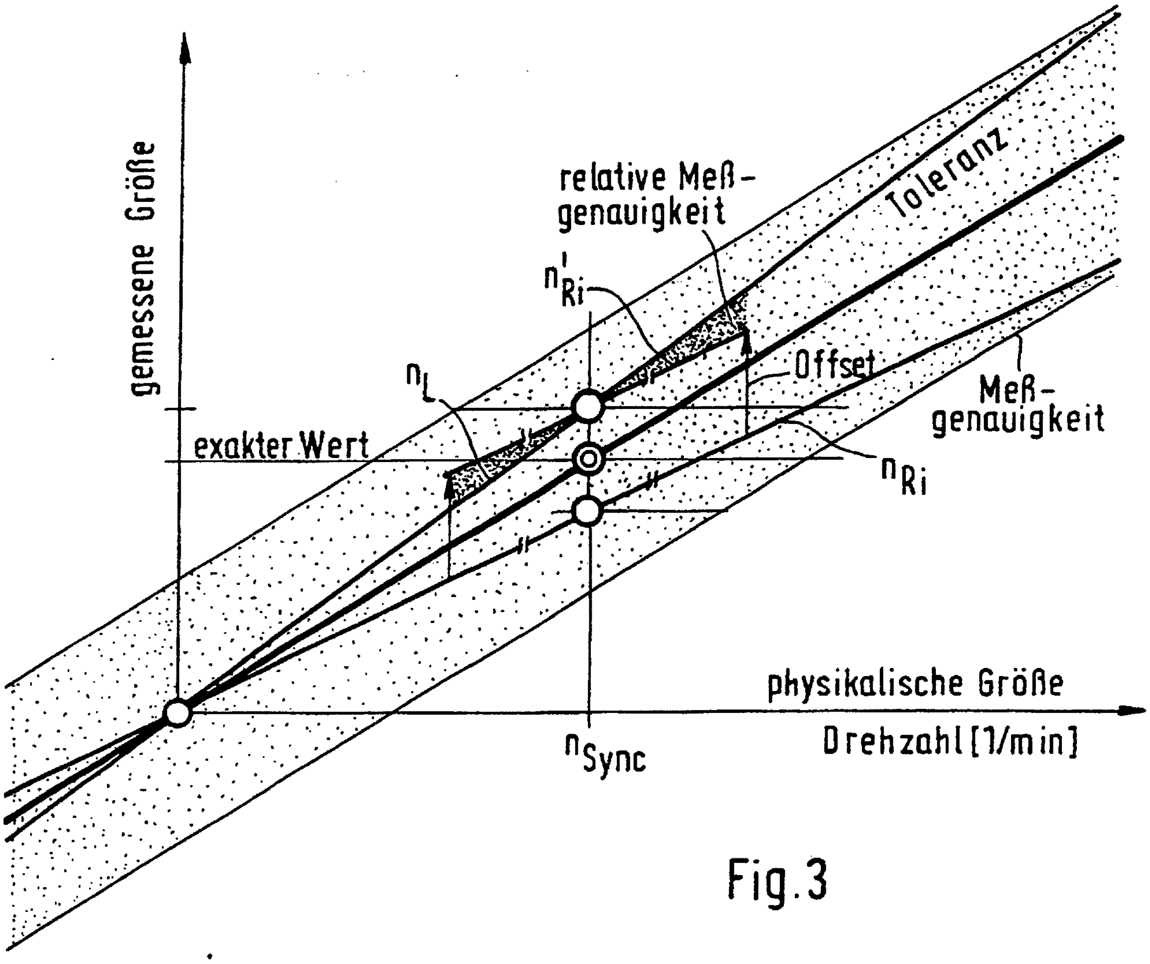
gemessene Größe
relative Meß-
genauigkeit
Toleranz
$n'_{Ri}$
$n_L$
Offset
Meß-
genauigkeit
exakter Wert
$n_{Ri}$
physikalische Größe
$n_{Sync}$
Drehzahl [1/min]

Fig. 3

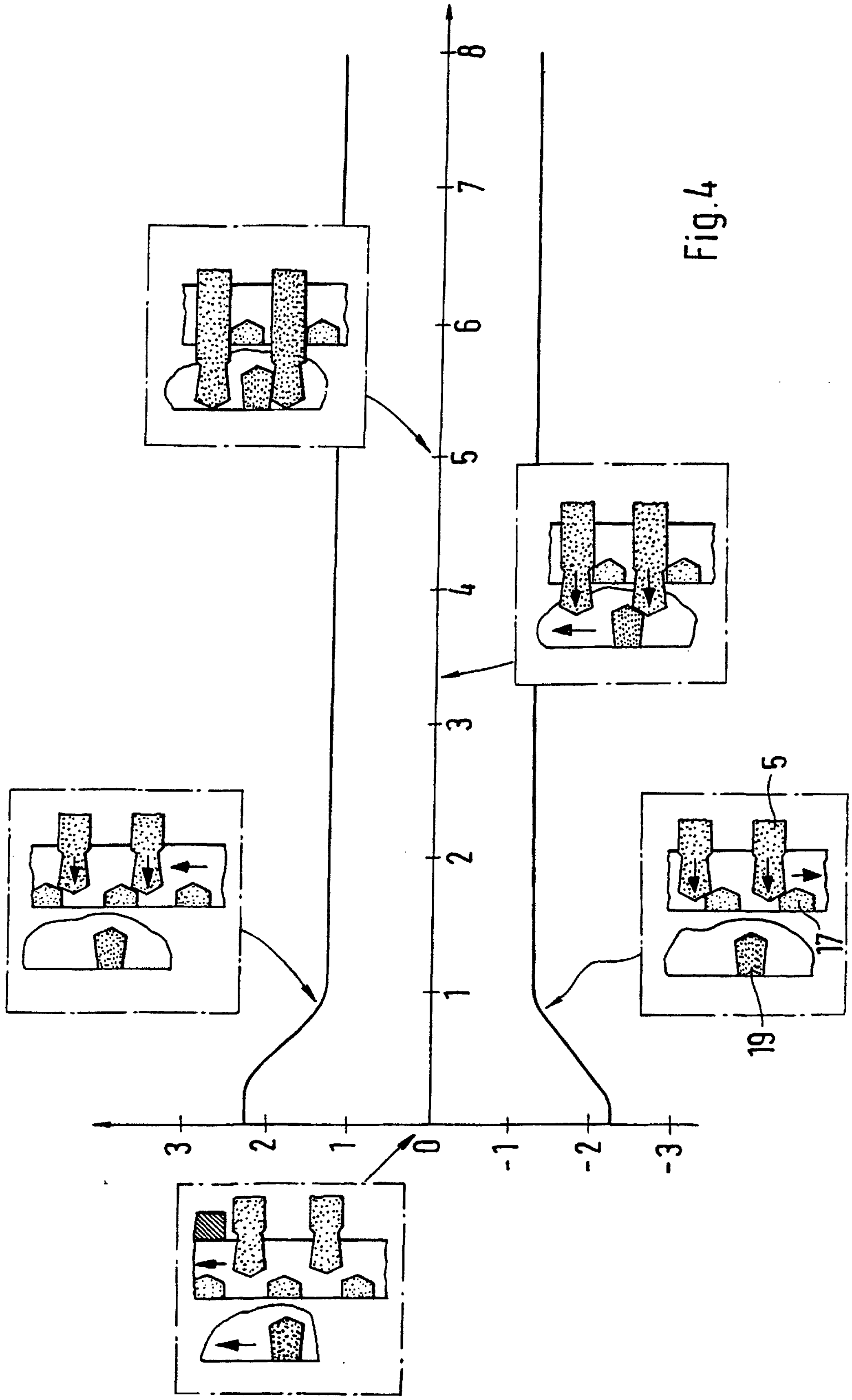


Fig.4

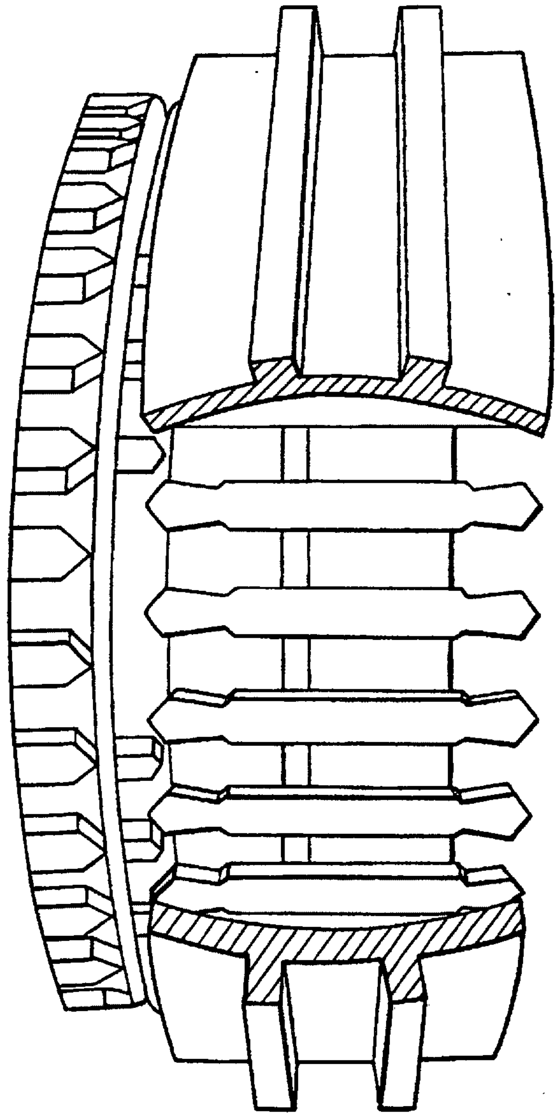

Fig.5